# EUROPÄISCHE PATENTSCHRIFT

(11) **EP 3 556 547 B1**
(45) Veröffentlichungstag und Bekanntmachung des Hinweises auf die Patenterteilung: **29.10.2025**
(21) Anmeldenummer: 19155638.0
(22) Anmeldetag: 06.02.2019
(51) Int. Cl.: B30B 9/30, A01F 15/08

(54) **LANDWIRTSCHAFTLICHE BALLENPRESSE SOWIE VERFAHREN ZU DEREN BETRIEB**
AGRICULTURAL BALING PRESS AND METHOD FOR OPERATING SAME
PRESSE À BALLES AGRICOLE AINSI QUE SON PROCÉDÉ DE FONCTIONNEMENT

(30) Priorität: 17.04.2018 DE 102018109106
(43) Veröffentlichungstag der Anmeldung: 23.10.2019
(73) Patentinhaber: Usines CLAAS France S.A.S, 57140 St. Rémy / Woippy (FR)
(72) Erfinder: Waechter, Julien, 57070 Saint- Julien- Ies- Metz (FR); Bonhomme, Thieny, 57730 Macheren (FR)
(74) Vertreter: CLAAS Gruppe

(56) Entgegenhaltungen:
- EP-A1- 1 606 992
- EP-A1- 2 803 256
- EP-A1- 3 228 182
- DE-A1- 102004 027 612
- DE-A1- 102011 006 823
- DE-B4- 102008 043 716
- US-A1- 2013 008 324
- US-A1- 2013 042 770
- US-A1- 2015 025 757
- US-A1- 2017 156 268

## Beschreibung

Die vorliegende Anmeldung betrifft eine landwirtschaftliche Ballenpresse gemäß dem Oberbegriff von Anspruch 1. Ferner betrifft die Anmeldung ein Verfahren zum Betrieb einer Ballenpresse gemäß dem Oberbegriff von Anspruch 7.

Die Ballenpresse ist dazu geeignet, quaderförmige Ballen zu pressen. Insbesondere werden derartige Ballenpressen dazu verwendet, Pflanzenreste aus der Getreideernte, insbesondere Stroh oder geschnittenes Gras zu Ballen zu pressen. Die Ballen werden im Weiteren typischerweise in der Landwirtschaft verwendet, beispielsweise als Futtermittel. Zur Herstellung der Ballen verfügt die Ballenpresse über ein Verdichtersystem, das einen Vorverdichter und einen Hauptverdichter umfasst. Mittels des Vorverdichters wird der Ballenpresse zugeführtes Material innerhalb eines Vorkanals vorverdichtet. Ausgehend von dem Vorverdichter wird das vorverdichtete Material in einen Hauptkanal überführt, in dem der Hauptverdichter wirkt. Ein Querschnitt des Hauptkanals ist typischerweise rechteckförmig ausgebildet, wodurch der im Entstehen begriffene Ballen seine quaderförmige Form erhält. Als Gegenlager, gegen das das Material innerhalb des Hauptkanals mittels des Hauptverdichters gepresst wird, dient typischerweise bereits verdichtetes, in dem Hauptkanal befindliches Material, insbesondere ein bereits fertiggestellter Ballen. Ferner verfügt die Ballenpresse über eine Bindeeinrichtung, mittels derer eine Menge verdichteten Materials mit einer Bindeschnur umschließbar ist, wodurch das Material von nachfolgendem Material abgetrennt wird. Auf diese Weise wird der fertige Ballen gebildet.

Ein fertiger Ballen wird in aller Regel an einem hinteren Ende der Ballenpresse mittels einer entsprechenden Fördereinrichtung aus dem Hauptkanal heraus geführt und beispielsweise auf einem Untergrund abgelegt. Zum Zweck der Qualitätssicherung verfügt die Ballenpresse über eine Wägeeinrichtung, mittels derer zumindest eine Masse des fertigen Ballens erfassbar ist. Auf diese Weise kann kontrolliert werden, ob die Verdichtung des Materials in der gewünschten Weise erfolgt ist.

Eine Ballenpresse der eingangs beschriebenen Art ist im Stand der Technik bereits bekannt. Hierzu wird auf die Internationale Patentanmeldung WO 2013/123976 A1 hingewiesen. Diese betrifft eine Ballenpresse, die gleichfalls mit einer Wägeeinrichtung ausgestattet ist. Ballenpresse ist dazu geeignet, aus einer Vielzahl von Massen bereits fertiggestellter Ballen einen Durchschnittswert zu ermitteln und diesen mit einem jeweils aktuellen Wert der Masse eines fertiggestellten Ballens gegenüberzustellen. Dem Maschinenführer der Arbeitsmaschinen, mittels derer die jeweilige Ballenpresse betrieben wird, wird diese Information zur Verfügung gestellt, sodass er nach eigenem Dafürhalten mindestens einen Betriebsparameter der Ballenpresse dahingehend verändern kann, dass sich die Massen nachfolgender Ballen wunschgemäß verändern. Die DE 10 2004 027 612 A1, die US 2013/042770 A1 und die US 2015/025757 A1 beschreiben ebenfalls jeweils Ballenpressen mit einer Wägeeinrichtung zur Ermittlung des Gewichts eines fertig gebundenen Ballens.

Weiterhin sind aus der US 2017/156268 A1 eine Ballenpresse gemäß dem Oberbegriff des Anspruches 1 sowie ein Verfahren zum Betrieb einer Ballenpresse bekannt.

Der Stand der Technik ist insoweit als nachteilig zu bewerten, als zum einen als Vergleichsmaßstab lediglich eine durchschnittliche Masse bereits fertiggestellter Ballen zur Verfügung gestellt wird. Weiterhin wird der Maschinenführer der Arbeitsmaschine stark beansprucht, da er neben seinen sonstigen Aufgaben, das heißt insbesondere dem Führen der die Ballenpresse schleppenden Arbeitsmaschine als solcher, zudem mit der fortwährenden Qualitätssicherung im Hinblick auf die zu erzeugenden Ballen belastet wird. In der Praxis führt dies nicht selten dazu, dass letztere Aufgabe vernachlässigt oder nur unzureichend erfüllt wird, sodass erzeugte Ballen hinsichtlich ihrer Masse bzw. ihrer Verdichtung eine ungewollt große Varianz aufweisen.

Der vorliegenden Anmeldung liegt mithin die Aufgabe zugrunde, eine Ballenpresse bereitzustellen, mittels derer die Erzeugung von Ballen einheitlicher Qualität vereinfacht ist.

Die zugrunde liegende Aufgabe wird erfindungsgemäß mittels einer Ballenpresse mit den Merkmalen des Anspruchs 1 gelöst. Vorteilhafte Ausgestaltungen ergeben sich aus den Unteransprüchen 2 bis 4.

Die erfindungsgemäße Ballenpresse ist durch eine Steuerungseinrichtung gekennzeichnet, die dazu geeignet ist, mindestens einen Betriebsparameter der Ballenpresse selbsttätig zu verändern. Eine solche Veränderung kann die Steuerungseinrichtung unter Hinzuziehung von Informationen vornehmen, die erfindungsgemäß von der Wägeeinrichtung zur Verfügung gestellt werden. Hierzu ist die Wägeeinrichtung mittels einer Datenverbindung mit der Steuerungseinrichtung verbunden, sodass Daten betreffend eine erfasste Masse eines jeweiligen Ballens mittels der Datenverbindung an die Steuerungseinrichtung leitbar sind. Die Steuerungseinrichtung ist dazu geeignet, dass sie den mindestens einen Betriebsparameter, vorzugsweise eine Mehrzahl von Betriebsparametern, in Abhängigkeit der erfassten Masse des jeweiligen Ballens derart verändert, dass die Masse mindestens eines, vorzugsweise einer Vielzahl, nachfolgenden Ballens in Richtung eines vorgegebenen Sollwerts verändert wird. Der Sollwert kann beispielsweise manuell eingegeben und auf diese Weise der Steuerungseinrichtung vorgegeben werden. Ebenfalls ist denkbar, dass die Steuerungseinrichtung bereits für verschiedene Materialien und/oder verschiedene Erntebedingungen verschiedene Sollwerte vorhält. Derartige Daten können insbesondere auf einem Datenspeicher der Steuerungseinrichtung hinterlegt sein.

Die erfindungsgemäße Ballenpresse hat viele Vorteile. Der wesentlichste besteht darin, dass die Ballenpresse ihren Betrieb gewissermaßen selbst verwaltet, wobei mindestens ein Betriebsparameter der Ballenpresse in Abhängigkeit einer mittels der Wägeeinrichtung ermittelten Masse eines jeweils fertiggestellten Ballens verändert wird. Demzufolge ist der Maschinenführer von der Aufgabe entbunden, Daten betreffend die Masse eines jeweils fertigstellten Ballens bzw. betreffend eine durchschnittliche Masse einer Vielzahl von Ballen zu beobachten und basierend auf seinen Beobachtungen informierte Entscheidungen zu treffen. Hierdurch wird die Führung der Arbeitsmaschine und mithin der Ballenpresse deutlich vereinfacht, wodurch wiederum die Qualität der produzierten Ballen steigt. Insbesondere kann die Aufmerksamkeit des Maschinenführers auf ein möglichst optimales Abfahren einer auf einem Untergrund, insbesondere einem Feld, liegenden Schwadablage konzentriert werden.

Ein weiterer Vorteil der erfindungsgemäßen Ballenpresse besteht darin, dass die Steuerung des mindestens einen Betriebsparameters selbsttätig erfolgt, wodurch eine deutlich engmaschigere Steuerung der Herstellung der Ballen ermöglicht wird. Insbesondere ist es mittels der Steuerungseinrichtung ohne Weiteres möglich, einen oder gleich mehrere Betriebsparameter der Ballenpresse nach jedem einzelnen fertiggestellten Ballen zu verändern, wodurch selbst auf geringfügige Schwankungen betreffend das zu verdichtende Material reagiert werden kann. Eine derart fortwährende und anhaltende Überwachung und Korrektur der Herstellung der Ballen ist mittels manueller Überwachung durch den Maschinenführer kaum oder sogar gar nicht zu leisten. Im Ergebnis ermöglicht die erfindungsgemäße Ballenpresse mithin eine einheitlich hohe Qualität der hergestellten Ballen bei gleichzeitiger Entlastung des Maschinenführers. Die im Stand der Technik zu beklagende Varianz hinsichtlich der Dichte bzw. der Masse hergestellter Ballen wird hierdurch deutlich gesenkt.

In einer vorteilhaften Ausgestaltung der erfindungsgemäßen Ballenpresse ist die Steuerungseinrichtung mittels einer Datenverbindung mit dem Hauptverdichter verbunden. Auf diese Weise ist die Steuerungseinrichtung dazu geeignet, mindestens einen Betriebsparameter des Hauptverdichters zu verändern. Insbesondere ist es denkbar, dass mittels der Steuerung ein Einfluss auf eine Antriebseinrichtung des Hauptverdichters genommen wird, die mit einem Verdichterkolben des Hauptverdichters zusammenwirkt, wobei mittels letzterem effektiv die Verdichtung innerhalb des Hauptkanals vorgenommen wird. Sollte beispielsweise die mittels der Wägeeinrichtung ermittelte Masse eines fertiggestellten Ballens unterhalb eines vorgegebenen Sollwerts liegen, besteht mithin die Möglichkeit, dass die Steuerungseinrichtung einen derartigen Einfluss auf den Hauptverdichter nimmt, dass eine maximale Presskraft erhöht wird, sodass das Material in dem Hauptkanal mittels des dort hin und her oszillierenden Verdichterkolbens stärker verdichtet wird als zuvor. Hierdurch wird der technische Effekt erzielt, dass - bei gleichbleibenden Volumen des nächsten Ballens - dessen Masse gegenüber einem vorhergehenden Ballen wunschgemäß erhöht wird.

Weiterhin kann eine solche Ballenpresse vorteilhaft sein, bei der die Steuerungseinrichtung mittels einer Datenverbindung mit dem Vorverdichter verbunden ist. Auf diese Weise ist die Steuerungseinrichtung dazu geeignet, mindestens einen Betriebsparameter des Vorverdichters zu verändern. Die Vorteile hierdurch ergeben sich entsprechend der vorstehenden Erläuterung im Zusammenhang mit dem Hauptverdichter. Von besonderem Vorteil kann es dabei sein, wenn die Steuerungseinrichtung sowohl mit dem Hauptverdichter als auch mit dem Vorverdichter verbunden ist, sodass die Steuerungseinrichtung Betriebsparameter beider Arbeitsorgane verändern kann, vorzugsweise gleichzeitig.

Dem liegt die Überlegung zugrunde, dass die Veränderung der Betriebsparameter des Hauptverdichters und/oder des Vorverdichters in aller Regel nicht in beliebigen Umfang vorgenommen werden kann, da produktionstechnische und/oder materialtechnische Grenzen vorliegen. Beispielsweise kann die Presskraft des Hauptverdichters weder beliebig weit abgesenkt noch beliebig weit gesteigert werden. Eine Untergrenze für die Presskraft ist beispielsweise dann erreicht, wenn die erfolgte Pressung nicht ausreicht, damit das Material an dem bereits in dem Hauptkanal befindlichen Material "hängenbleibt", sondern stattdessen aufgrund seiner Gewichtskraft sich an einem Boden des Hauptkanals ansammelt. Umgekehrt ist die Presskraft auch nach oben hin begrenzt, da die Ballenpresse bzw. einzelne Bauteile derselben lediglich bis zu einer bestimmten Last belastbar sind, deren Überschreiten zu einer Beschädigung oder zumindest einem übermäßigen Verschleiß der Ballenpresse führen kann. Vergleichbare Randbedingungen gelten analog für den Vorverdichter. Entsprechend ergibt sich, dass zumindest ein Betriebsparameter, gegebenenfalls mehrere oder sämtliche Betriebsparameter, der Ballenpresse lediglich innerhalb eines begrenzten Parameterraums veränderbar sind, wobei ein jeweiliger Parameterraum durch einen unteren sowie einen oberen Grenzwert definiert ist.

Die Einflussnahme auf mehrere Betriebsparameter der Ballenpresse durch die Steuerungseinrichtung erhöht mithin deren Spielraum zur Beeinflussung der Massen nachfolgender Ballen, wobei sinnvollerweise mehrere Betriebsparameter abwechselnd sukzessive oder gleichzeitig verändert werden, anstelle lediglich einen Betriebsparameter zu verändern, bis dieser gegebenenfalls einen Grenzwert des zur Verfügung stehenden Parameterraums erreicht. Eine gleichartige Veränderung der Betriebsparameter verschiedener Arbeitsorgane der Ballenpresse ermöglicht demgegenüber eine gleichförmige Belastung der Arbeitsorgane, wodurch zum einen der Verschleiß der letzteren minimiert und zum anderen das Arbeitsverhalten der Ballenpresse insgesamt optimiert werden.

Erfindungsgemäß umfasst die Ballenpresse Sensoreinrichtungen, mittels derer mindestens ein Materialparameter des zu verdichtenden Materials erfassbar ist. Die Sensoreinrichtungen sind mittels einer Datenverbindung mit der Steuerungseinrichtung verbunden, sodass mittels der Sensoreinrichtungen erfasste Daten der Steuerungseinrichtung zur Verfügung gestellt werden können. Vorzugsweise verfügt die Ballenpresse über eine Mehrzahl von Sensoreinrichtungen, mittels derer jeweils unterschiedliche Materialparameter oder wahlweise ein einzelner Materialparameter mehrfach erfassbar ist. Letzteres kann vorteilhaft sein, um die Genauigkeit betreffend den jeweiligen Materialparameter zu steigern.

Erfindungsgemäß verfügt die Ballenpresse über eine Sensoreinrichtung, mittels derer eine Feuchtigkeit des Materials erfassbar ist. Dem liegt die Überlegung zugrunde, dass die Feuchtigkeit des Materials einen erheblichen Einfluss auf das Materialverhalten im Zuge der Verdichtung haben kann, wobei typischerweise eine höhere Feuchtigkeit zu einer gesteigerten Dichte des Materials bei ansonsten gleichbleibenden Betriebsparametern der Ballenpresse führt. Mittels Zurverfügungstellens einer solchen Information ist die Steuerungseinrichtung dazu in der Lage, mindestens einen Betriebsparameter, vorzugsweise eine Mehrzahl von Betriebsparametern, der Ballenpresse dahingehend zu verändern, dass die Massen nachfolgender Ballen im Sinne der Annäherung oder Erreichung des vorgegebenen Sollwerts beeinflusst werden.

Alternativ oder zusätzlich ist es denkbar, dass die Steuerungseinrichtung in Abhängigkeit mindestens eines erfassten Materialparameters eigenständig den vorgegebenen Sollwert anpasst. Insbesondere ist es denkbar, dass mindestens eine Sensoreinrichtung vorhanden ist, mittels derer die Art des zu verdichtenden Materials bestimmbar ist. In Abhängigkeit hiervon können verschiedene Sollwerte für die Masse eines zu erzeugenden Ballens vorteilhaft sein.

Die Steuerungseinrichtung umfasst erfindungsgemäß mindestens eine Datenverarbeitungsanlage und mindestens einen Datenspeicher, wobei auf dem Datenspeicher mindestens eine zumindest mittelbare Beziehung zwischen der Masse eines Ballens und mindestens einem Betriebsparameter der Ballenpresse gespeichert ist. Alternativ ist es ebenso denkbar, dass die Beziehung eine Gegenüberstellung einer Dichte eines Ballens und mindestens einen Betriebsparameter betrifft. Mittels einer derart ausgestatteten Steuerungseinrichtung ist es besonders einfach möglich, dass selbige selbsttätig mindestens einen Betriebsparameter der Ballenpresse verändert, da die Steuerungseinrichtung lediglich mittels ihrer Datenverarbeitungsanlage auf den Datenspeicher zugreifen und die dort hinterlegte Beziehung auslesen muss. In Abhängigkeit besagter Beziehung kann die Steuerungseinrichtung dann den mindestens einen Betriebsparameter der Ballenpresse auf einen Wert verändern, der die gewünschte Masse des Ballens hervorbringt.

Vorteilhafterweise ist auf dem Datenspeicher zu mindestens einem Betriebsparameter der Ballenpresse der vorstehend beschriebene Parameterraum gespeichert, anhand dessen sich ergibt, innerhalb welcher Grenzen ein jeweiliger Betriebsparameter verändert werden kann. Ein jeweiliger Parameterraum ist sowohl nach oben als auch nach unten mittels entsprechender Grenzwerte begrenzt.

Zur Einflussnahme auf die Masse eines herzustellenden Ballens kann es von besonderem Vorteil sein, wenn auf eine Fahrgeschwindigkeit der Ballenpresse Einfluss genommen werden kann. Da es sich bei der Ballenpresse um eine Schleppmaschine handelt, die mittels einer landwirtschaftlichen Arbeitsmaschine geschleppt und angetrieben werden muss, kann eine unmittelbare Steuerung der Fahrgeschwindigkeit der Ballenpresse nicht direkt und ausschließlich an der Ballenpresse vorgenommen werden. Daher wird die zugrunde liegenden Aufgabe ferner erfindungsgemäß mittels einer Erntemaschinenanordnung gelöst, die neben einer Ballenpresse, insbesondere einer solchen gemäß der vorstehenden Beschreibung, eine Arbeitsmaschine umfasst, mittels derer die Ballenpresse schleppbar ist. Hierzu ist die Ballenpresse an die Arbeitsmaschinen gekoppelt. Ferner sind die Arbeitsmaschine und die Ballenpresse mittels einer Antriebskupplung miteinander verbunden, sodass mittels der Arbeitsmaschine eine Energie zum Antrieb der Ballenpresse zur Verfügung gestellt werden kann. Auf diese Weise sind Arbeitsorgane der Ballenpresse mittels der Arbeitsmaschine antreibbar.

Die Erntemaschinenanordnung umfasst erfindungsgemäß mindestens eine Steuerungseinrichtung, die derart mit der Arbeitsmaschine in Wirkverbindung steht, dass sie dazu geeignet ist, mindestens einen Betriebsparameter der Arbeitsmaschine selbsttätig zu verändern. Dies betrifft vorteilhafterweise insbesondere den Betriebsparameter "Fahrgeschwindigkeit der Arbeitsmaschine". Letztere wirkt sich unmittelbar auf die Fahrgeschwindigkeit der Ballenpresse aus, die mittels der Arbeitsmaschine geschleppt wird. Mittels beispielsweise einer Reduktion der Fahrgeschwindigkeit der Arbeitsmaschine und folglich der Ballenpresse wird ein Durchsatz von Material durch die Ballenpresse reduziert, da letzteres, das typischerweise in Form einer Schwadablage auf einem Untergrund vorliegt, entsprechend reduzierten Massenstrom werden kann, während die Betriebsparameter der Ballenpresse im Übrigen unverändert bleiben. Der geringere Massenstrom an zu verdichtendem Material in die Ballenpresse hinein führt zu einer höheren Dichte eines sich anschließenden Ballens und folglich zu einer höheren Masse des letzteren. Umgekehrt kann die Masse eines nachfolgenden Ballens mittels einer Erhöhung der Fahrgeschwindigkeit reduziert werden.

Vorteilhafterweise verfügt die Arbeitsmaschine der Erntemaschinenanordnung über mindestens einen Bildschirm, mittels dessen ein Betriebsstatus der Ballenpresse und/oder der Arbeitsmaschine darstellbar ist bzw. sind, sodass diese Information für den Maschinenführer einsehbar und kontrollierbar ist. Weiterhin ist es denkbar, die Arbeitsmaschine mit einer Eingabeeinrichtungen auszustatten, mittels derer der Maschinenführer mindestens einen Betriebsparameter der Arbeitsmaschine und/oder mindestens einen Betriebsparameter der Ballenpresse beeinflussen kann. Von besonderem Vorteil kann es sein, die Eingabeeinrichtungen derart auszubilden, dass der Sollwert betreffend die Dichte oder die Masse herzustellender Ballen veränderbar ist. Auf diese Weise ist es grundsätzlich möglich, dass der Maschinenführer gemäß individueller Vorgabe, die sich beispielsweise aus Umständen des angegliederten landwirtschaftlichen Betriebs ergibt, Einfluss auf die Masse der herzustellenden Ballen nehmen kann. Erfindungsgemäß wird es daraufhin der Steuerungseinrichtung der Ballenpresse bzw. der Erntemaschinenanordnung überlassen, die Betriebsparameter der Ballenpresse und/oder der Arbeitsmaschine derart zu verändern, dass die Massen nachfolgender Ballen in Richtung des Sollwerts angenähert werden, vorzugsweise den Sollwert annehmen.

In verfahrenstechnischer Hinsicht wird die zugrunde liegende Aufgabe erfindungsgemäß mittels des Verfahrens mit den Merkmalen des Anspruchs 7 gelöst. Vorteilhafte Ausgestaltungen ergeben sich aus den Unteransprüchen 8 bis 12.

Das erfindungsgemäße Verfahren umfasst die folgenden Verfahrensschritte:
a) Zu verdichtendes Material wird mittels der Ballenpresse von einem Untergrund aufgenommen und einem Vorkanal zugeführt.
b) Innerhalb des Vorkanals wird das Material mittels eines Vorverdichters verdichtet und an in einen Hauptkanal überführt.
c) Innerhalb des Hauptkanals wird das Material mittels eines Hauptverdichters weiter verdichtet.
d) Verdichtetes Material wird mittels einer Bindeeinrichtung mit einer Bindeschnur eingefasst, sodass sich ein Ballen bildet.
e) Mittels einer Wägeeinrichtung wird eine Masse des jeweiligen Ballens bestimmt.

Erfindungsgemäß werden Daten betreffend eine Masse eines jeweilig mittels einer Wägeeinrichtung gewogenen Ballens an eine Steuerungseinrichtung der Ballenpresse geleitet, sodass diese Daten von der Steuerungseinrichtung berücksichtigt werden können. In Abhängigkeit der erfassten Masse wird sodann mittels der Steuerungseinrichtung selbsttätig mindestens ein Betriebsparameter der Ballenpresse verändert, sodass die Masse mindestens eines nachfolgenden Ballens, vorzugsweise sämtlicher nachfolgender Ballen, in Richtung eines vorgegebenen Sollwerts verändert wird bzw. werden, wobei auf einem Datenspeicher der Steuerungseinrichtung mindestens eine Beziehung zwischen der Masse eines Ballens und dem mindestens einen Betriebsparameter der Ballenpresse und eine Beziehung zwischen einer mittels einer Sensoreinrichtung der Ballenpresse erfassten Feuchte des aufgenommenen Materials und dem Sollwert für die Masse eines Ballens hinterlegt ist.

Das erfindungsgemäße Verfahren ist mittels der erfindungsgemäßen Ballenpresse besonders einfach durchführbar. Die sich hieraus ergebenden Vorteile sind vorstehend bereits im Zusammenhang mit der Ballenpresse erläutert. Insbesondere wird der Maschinenführer der die Ballenpresse schleppenden Arbeitsmaschine von der fortwährenden Überwachung und Beeinflussung der Ballenpresse entlastet, wodurch seine Aufmerksamkeit für die Steuerung der Arbeitsmaschine gesteigert wird. Im Ergebnis führt dies zu einer doppelten Verbesserung der Qualität der hergestellten Ballen, da zum einen die Steuerungseinrichtung eine engmaschigere Veränderung einzelner oder mehrerer Betriebsparameter der Ballenpresse vornehmen kann als dies der Maschinenführer tun könnte und zum anderen der Maschinenführer die Ballenpresse in Abwesenheit anderer Ablenkungen genauer steuern kann.

In einer vorteilhaften Ausgestaltung des erfindungsgemäßen Verfahrens wird mittels der Steuerungseinrichtung mindestens ein Betriebsparameter betreffend den Hauptverdichter und oder mindestens ein Betriebsparameter betreffend den Vorverdichter der Ballenpresse geändert. Wie vorstehend bereits ausgeführt, sind diese Betriebsparameter besonders gut geeignet, auf die Dichte und mithin die Masse nachfolgender Ballen Einfluss zu nehmen. Insbesondere kann es von Vorteil sein, wenn zumindest eine Presskraft des Hauptverdichters und/oder eine Presskraft des Vorverdichters geändert wird bzw. werden. Diese Betriebsparameter sind mittels entsprechender Ansteuerung der jeweils zugehörigen Antriebseinrichtungen besonders einfach veränderbar und sind gleichzeitig für die Einflussnahme auf die Dichte nachfolgender Ballen von besonderer Bedeutung.

In einer weiterhin vorteilhaften Ausgestaltung des erfindungsgemäßen Verfahrens wird mittels der Steuerungseinrichtung mindestens ein Betriebsparameter einer die Ballenpresse schleppenden landwirtschaftlichen Arbeitsmaschine verändert, vorteilhafterweise zumindest die Fahrgeschwindigkeit der Arbeitsmaschine. Die Vorteile der Einflussnahme auf diesen Betriebsparameter der Arbeitsmaschine sind vorstehend bereits ausgeführt.

In einer weiterhin bevorzugten Ausführungsform des erfindungsgemäßen Verfahrens wird mittels der Steuerungseinrichtung eine Mehrzahl von Betriebsparametern der Ballenpresse und/oder der zugehörigen landwirtschaftlichen Arbeitsmaschine verändert. Vorteilhafterweise findet diese Veränderung gleichzeitig statt, wodurch die Steuerungseinrichtung besonders zügig auf sich ändernde Umstände reagieren kann. Die Veränderung mehrerer Betriebsparameter ist insbesondere dann sinnvoll, wenn die Betriebsparameter in vorteilhafterweise lediglich innerhalb eines vorgegebenen Parameterraums verändert werden. Ein jeweiliger Parameterraum ist durch Grenzwerte nach oben und unten beschränkt. Entsprechendes ist vorstehend bereits ausgeführt. Die Veränderung mehrerer Betriebsparameter bietet mithin den Vorteil, dass bei Ausschöpfung des Parameterraums eines Betriebsparameters die Veränderung eines anderen Parameters möglich ist, um trotz Erreichen eines Grenzwerts für einen der Betriebsparameter noch eine weitere Einflussnahme auf die Masse nachfolgender Ballen zu ermöglichen. Insbesondere ist es von Vorteil, wenn zumindest der Betriebsparameter "Presskraft" des Hauptverdichters und/oder des Vorverdichters der Ballenpresse sowie der Betriebsparameter "Fahrgeschwindigkeit" der landwirtschaftlichen Arbeitsmaschine in Kombination verändert werden. Diese Betriebsparameter bieten den größten Spielraum im Hinblick auf eine Einflussnahme auf die Masse der herzustellenden Ballen.

Die erfindungsgemäße Ballenpresse sowie das erfindungsgemäße Verfahren sind nachstehend anhand eines Ausführungsbeispiels, das in den Figuren dargestellt ist, näher erläutert. Es zeigt:
- Fig. 1:: Einen Querschnitt durch eine erfindungsgemäße Ballenpresse und
- Fig. 2:: Eine schematische Ansicht einer erfindungsgemäßen Erntemaschinenanordnung.

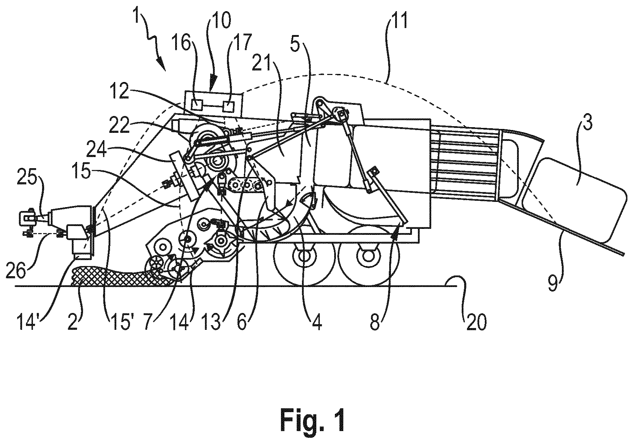

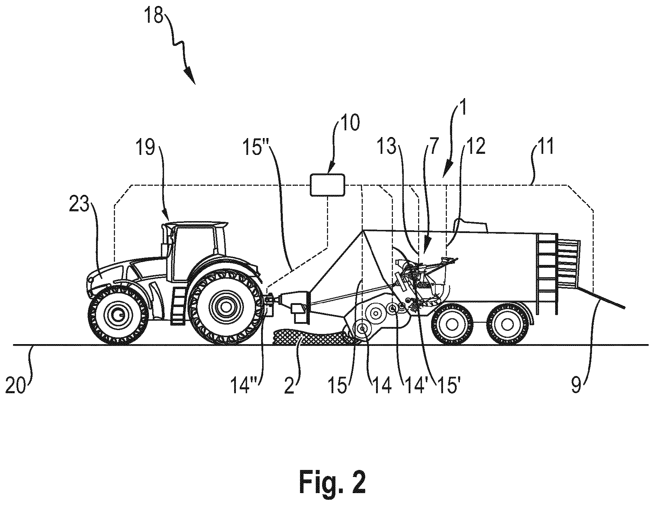

Ein Ausführungsbeispiel, das in den **Figuren 1** **und** **2** gezeigt ist, umfasst eine erfindungsgemäße Ballenpresse **1** die dazu geeignet ist, Material **2** zu quaderförmigen Ballen **3** zu pressen. Hierzu verfügt die Ballenpresse **1** über einen Vorverdichter **6** und einen Hauptverdichter **7,** wobei der Vorverdichter **6** dazu geeignet ist, in einem Vorkanal **4** befindliches Material **2** vorzuverdichten und ausgehend von dem Vorkanal **4** in einen Hauptkanal **5** zu überführen. Innerhalb des Hauptkanals **5** wird besagtes Material **2** mittels des Hauptverdichters **7** weiter verdichtet, wobei ein Verdichterkolben **21** innerhalb des Hauptkanals **5** oszillierend hin und her bewegt wird. Hierdurch wird das Material **2** sukzessive gepresst, sodass schließlich ein Ballen **3** entsteht. Der Verdichterkolben **21** wird mittels einer ihr zugeordneten Antriebseinrichtung **22** des Hauptverdichters **7** angetrieben, die in dem gezeigten Beispiel zur Überwindung von Belastungsspitzen mit einem Schwungrad **24** zusammenwirkt.

Zur Fertigstellung eines jeweiligen Ballens **3** verfügt die Ballenpresse **1** über eine Bindeeinrichtung **8,** mittels derer vorverdichtetes Material **2** mit einer Bindeschnur einfassbar ist. Hierdurch wird das eingefasste Material **2** von jeweils nachfolgendem Material **2,** das weiterhin sukzessive mittels des Hauptverdichters **7** gepresst wird, separiert, wodurch ein jeweiliger Ballen **3** definiert ist.

An einem rückwärtigen Ende der Ballenpresse **1** verfügt selbige über eine Wägeeinrichtung **9,** mittels derer eine Masse eines jeweiligen Ballens **3** vor seiner Ablage auf einem Untergrund **20** erfassbar ist. Erfindungsgemäß ist die Ballenpresse **1** mit einer Steuerungseinrichtung **10** ausgestattet, die in den **Figuren 1** **und** **2** lediglich schematisch dargestellt ist. Die Steuerungseinrichtung **10** ist mittels einer Datenverbindung **11** mit der Wägeeinrichtung **9** verbunden, sodass Daten betreffend die Masse eines jeweilig gewogenen Ballens **3** an die Steuerungseinrichtung **10** übertragbar sind. Die Übertragung der Daten bzw. die Art der Datenverbindung **11** kann grundsätzlich kabelgebunden oder kabellos stattfinden. Die Steuerungseinrichtung **10** ist in dem gezeigten Beispiel zusätzlich zu der Wägeeinrichtung **9** ferner mit dem Hauptverdichter **7** sowie dem Vorverdichter **6** verbunden, wobei die Verbindung zwischen dem Hauptverdichter **7** und der Steuerungseinrichtung **10** mittels einer Datenverbindung **12** und die Verbindung zwischen dem Vorverdichter **6** und der Steuerungseinrichtung **10** mittels einer Datenverbindung **13** hergestellt sind. Mittels Zurverfügungstellens der Daten betreffend die Masse eines jeweiligen Ballens **3** mittels der Wägeeinrichtung **9** ist die Steuerungseinrichtung **10** erfindungsgemäß dazu geeignet, selbsttätig, das heißt ohne die Notwendigkeit der Einflussnahme oder Bestätigung durch einen Maschinenführer, Betriebsparameter der Ballenpresse **1** zu verändern.

In dem gezeigten Beispiel betrifft dies Betriebsparameter des Hauptverdichters **7** sowie des Vorverdichters **6,** mit denen die Steuerungseinrichtung **10** verbunden ist. Insbesondere ist es möglich, dass mittels der Steuerungseinrichtung **10** eine Presskraft des Hauptverdichters **7** und/oder des Vorverdichters **6** verändert wird. Mittels Veränderung der Presskräfte wird je nachdem eine Erhöhung oder eine Verminderung der Dichte bzw. der Verdichtung des Materials **2** bewirkt. Dabei versteht es sich, dass mit Veränderung der Dichte des Materials **2** bei gleichbleibendem Volumen eines herzustellenden Ballens **3** unmittelbar dessen Masse verändert wird. Auf diese Weise ist es der Steuerungseinrichtung **10** möglich, selbsttätig mittels der Veränderung mindestens eines Betriebsparameters der Ballenpresse **1** einen Einfluss auf die Massen nachfolgender Ballen **3** zu nehmen.

Die Einflussnahme der Steuerungseinrichtung **10** hängt dabei von einem vorgegebenen Sollwert ab, den die Massen der Ballen **3** möglichst annehmen sollen. Sollte die Masse eines jeweils mittels der Wägeeinrichtung **9** gewogenen Ballens den vorgegebenen Sollwert unterschreiben, kann die Steuerungseinrichtung **10** entsprechende Maßnahmen betreffend die Betriebsparameter der Ballenpresse **1** vornehmen. Umgekehrt analog wird eine solche Einflussnahme auch bei Überschreiten des Sollwerts vorgenommen. Auf diese Weise wird erfindungsgemäß der Effekt erzielt, dass der Maschinenführer einer landwirtschaftlichen Arbeitsmaschine **19,** mittels derer die Ballenpresse **1** geschleppt wird (siehe **Figur 2**) sich nicht um die Einstellung bzw. Korrektur der Betriebsparameter der Ballenpresse **1** kümmern muss, um ein möglichst gleichmäßiges Ergebnis hinsichtlich der Massen der hergestellten Ballen **3** zu erreichen.

Erfindungsgemäß verfügt die Steuerungseinrichtung **10** über eine Datenverarbeitungsanlage **16** sowie einen ihr zugeordneten Datenspeicher **17.** Daten, insbesondere betreffend einen Sollwert für die Masse herzustellender Ballen **3,** können besonders einfach auf dem Datenspeicher **17** hinterlegt werden. Die Datenverarbeitungsanlage **16** ist sodann dazu geeignet, die entsprechenden Daten auszulesen und unter Verwendung der von der Wägeeinrichtung **9** zur Verfügung gestellten Daten Veränderung eines oder mehrerer Betriebsparameter der Ballenpresse **1** zu veranlassen.

Die erfindungsgemäße Ballenpresse **1** verfügt erfindungsgemäß ferner über eine Mehrzahl von Sensoreinrichtungen **14, 14',** die jeweils mittels zugehöriger Datenverbindungen **15, 15'** mit der Steuerungseinrichtung **10** verbunden sind. Die Sensoreinrichtungen **14, 14'** sind dazu geeignet, Materialparameter des zu verdichtenden Materials zu erfassen und als zusätzliche Information der Steuerungseinrichtung **10** zur Verfügung zu stellen. Erfindungsgemäß ist die Sensoreinrichtung **14** dazu ausgebildet sein, eine Feuchte des aufgenommenen Materials **2** zu ermitteln. Mittels dieser Information wird bei Zugrundeliegen einer auf dem Datenspeicher **17** hinterlegten Beziehung, die eine Korrelation zwischen der Feuchte des Materials **2** und einem Sollwerts für die Masse der Ballen **3** beinhaltet, mindestens ein Betriebsparameter der Ballenpresse **1** dahingehend verändert, dass die Massen nachfolgender Ballen **3** in Richtung des (geänderten) Sollwerts verändert werden. Die weitere Sensoreinrichtung **14'** ist erfindungsgemäß von einem optischen Sensor gebildet, der dazu geeignet ist, eine Geometrie einer Schwadablage des Materials **2** auf dem Untergrund **20** unmittelbar vor der Aufnahme des Materials **2** mittels der Ballenpresse **1** zu erfassen. Die Form der Schwadablage kann insbesondere eine Information über das zur Verfügung gestellte Material **2** vermitteln, woraus sich ein Massenstrom des Materials **2** bestimmen lässt. Das Vorsehen weiterer Sensoreinrichtungen **14** ist selbstverständlich ohne Weiteres denkbar.

Im Verbund einer erfindungsgemäßen Erntemaschinenanordnung **18,** die in **Figur 2**, dargestellt ist, ist eine erfindungsgemäße Ballenpresse **1** mit einer landwirtschaftlichen Arbeitsmaschine **19** gekoppelt. Die Koppelung findet zum einen mittels einer Schleppkupplung **25** statt, mittels derer indirekte eine Beschleunigung sowie eine indirekte Abbremsung der Ballenpresse **1** ermöglicht wird. Zum anderen sind die Arbeitsmaschine **19** und die Ballenpresse **1** mittels einer Drehmomentkupplung **26** verbunden, über die die Ballenpresse **1** mit Energie zum Betrieb ihrer Arbeitsorgane versorgt wird. Die Arbeitsmaschine **19** ist hier von einem Traktor gebildet.

Die Erntemaschinenanordnung **18** ist insoweit von besonderem Vorteil, als mittels der Steuerungseinrichtung **10** ein unmittelbarer Einfluss auf eine Fahrgeschwindigkeit der Arbeitsmaschine **19** genommen werden kann. Dabei versteht es sich, dass eine Veränderung der Fahrgeschwindigkeit der Arbeitsmaschine **19** unmittelbar zu einer Veränderung der Fahrgeschwindigkeit der Ballenpresse **1** führt. Besagter Betriebsparameter der Arbeitsmaschine **19,** der selbsttätig mittels der Steuerungseinrichtung **10** veränderbar ist, hat einen unmittelbaren Einfluss auf den Massenstrom des Materials **2** durch die Ballenpresse **1.** Mithin wird der Ballenpresse **1** je nach Veränderung der Fahrgeschwindigkeit der Arbeitsmaschine **19** mehr oder weniger Material **2** innerhalb desselben Zeitraums zugeführt, wobei die Verdichtung des Materials **2** umso größer ist, desto geringer der Massenstrom des der Ballenpresse **1** zugeführten Materials **2** ist. Insbesondere kann bei ansonsten gleichbleibenden Betriebsparametern des Hauptverdichters **7** sowie des Vorverdichters **6** die zur Verfügung gestellte Verdichtungsenergie auf weniger Material **2** angewendet werden, wodurch die Verdichtungsleistung steigt. Analog hierzu steigt mithin auch die Masse eines Sprechens hergestellten Ballens **3.** Folglich ist es im Falle einer gewünschten Erhöhung der Masse nachfolgender Ballen **3** zwecks Annäherung derselben an den vorgegebenen Sollwert sinnvoll, wenn die Steuerungseinrichtung **10** die Fahrgeschwindigkeit der Arbeitsmaschine **19** reduziert.

Hierzu ist die Steuerungseinrichtung **10** mit einer Verbrennungskraftmaschine **23** der Arbeitsmaschine **19** verbunden. Im Ergebnis ist der Maschinenführer der Arbeitsmaschinen **19** zur Erzielung eines optimalen Arbeitsergebnisses im Hinblick auf die Ballen **3** auch davon entbunden, die Fahrgeschwindigkeit der Arbeitsmaschine **19** zu überwachen und entsprechend sich ändernder Umstände fortwährend anzupassen. Hierdurch werden der Maschinenführer entlastet und gleichzeitig die Qualität der herzustellenden Ballen **3** vergrößert.

In dem gezeigten Beispiel ist zusätzlich an der Arbeitsmaschine **19** eine weitere Sensoreinrichtung **14"** angeordnet, die mittels einer Datenverbindung **15"** mit der Steuerungseinrichtung **10** verbunden ist. Die Sensoreinrichtung **14"** steht in Verbindung mit der Drehmomentkupplung **26** der Arbeitsmaschine **19** und ist dazu geeignet, ein übertragenes Drehmoment zu erfassen und an die Steuerungseinrichtung **10** weiterzuleiten. Auf diese Weise werden der Steuerungseinrichtung **10** Informationen betreffend eine Auslastung der Ballenpresse **1** zur Verfügung gestellt. Die Anordnung weitere Sensoreinrichtungen sowie deren Verbindung mit der Steuerungseinrichtung **10** ist selbstverständlich ohne Weiteres denkbar.

### Bezugszeichenliste

- 1: Ballenpresse
- 2: Material
- 3: Ballen
- 4: Vorkanal
- 5: Hauptkanal
- 6: Vorverdichter
- 7: Hauptverdichter
- 8: Bindeeinrichtung
- 9: Wägeeinrichtung
- 10: Steuerungseinrichtung
- 11: Datenverbindung
- 12: Datenverbindung
- 13: Datenverbindung
- 14: Sensoreinrichtung
- 15: Datenverbindung
- 16: Datenverarbeitungsanlage
- 17: Datenspeicher
- 18: Erntemaschinenanordnung
- 19: Arbeitsmaschine
- 20: Untergrund
- 21: Verdichterkolben
- 22: Antriebseinrichtung
- 23: Verbrennungskraftmaschine
- 24: Schwungrad
- 25: Schleppkupplung
- 26: Drehmomentkupplung

## Patentansprüche

1. Landwirtschaftliche Ballenpresse (1) zum Pressen von Material (2) zu quaderförmigen Ballen (3), insbesondere zum Pressen von Strohballen, umfassend
- einen Vorkanal (4),
- einen Hauptkanal (5),
- mindestens einen Vorverdichter (6),
- mindestens einen Hauptverdichter (7) sowie
- mindestens eine Bindeeinrichtung (8),
wobei das Material (2) innerhalb des Vorkanals (4) mittels des Vorverdichters (6) vorverdichtbar und anschließend in den Hauptkanal (5) überführbar ist,
wobei ein Verdichterkolben (21) des Hauptverdichters (7) innerhalb des Hauptkanals (5) oszillierend hin und her bewegbar und auf diese Weise in dem Hauptkanal (5) befindliches Material (2) weiter verdichtbar ist,
wobei das verdichtete Material (2) mittels der Bindeeinrichtung (8) mit einer Bindeschnur einfassbar ist, sodass das Material (2) zu einem Ballen (3) zusammengefasst ist,
**dadurch gekennzeichnet,**
**dass** die Ballenpresse (1) mindestens eine Wägeeinrichtung (9) umfasst,
wobei mittels der Wägeeinrichtung (9) Daten betreffend eine Masse zumindest eines Ballens (3) erfassbar sind, wobei die Ballenpresse (1) eine Steuerungseinrichtung (10) umfasst, die dazu geeignet ist, mindestens einen Betriebsparameter der Ballenpresse (1) selbsttätig zu verändern,
wobei die von der Wägeeinrichtung (9) erfassten Daten betreffend die Masse eines jeweiligen Ballens (3) mittels einer Datenverbindung (11) an die Steuerungseinrichtung (10) leitbar sind,
wobei die Steuerungseinrichtung (10) dazu geeignet ist, den mindestens einen Betriebsparameter in Abhängigkeit der Masse des jeweiligen Ballens (3) derart selbsttätig zu verändern, dass die Masse mindestens eines nachfolgenden Ballens (3) in Richtung eines vorgegebenen Sollwerts verändert wird,
wobei die Wägeeinrichtung (9) an einem rückwärtigen Ende der Ballenpresse (1) angeordnet ist,
wobei mittels der Wägeeinrichtung (9) die Masse des jeweiligen Ballens (3) vor seiner Ablage auf einem Untergrund (20) erfassbar ist,
wobei die Ballenpresse (1) Sensoreinrichtungen (14, 14') umfasst, mittels derer mindestens ein Materialparameter des zu verdichtenden Materials (2) erfassbar ist,
wobei die Sensoreinrichtungen (14, 14') mittels einer Datenverbindung (15) mit der Steuerungseinrichtung (10) verbunden sind,
wobei die eine Sensoreinrichtung (14) dazu ausgebildet ist, eine Feuchte des aufgenommenen Materials (2) zu ermitteln, und die weitere Sensoreinrichtung (14') von einem optischen Sensor gebildet ist, der dazu geeignet ist, eine Geometrie einer Schwadablage des Materials (2) auf dem Untergrund (20) unmittelbar vor der Aufnahme des Materials (2) mittels der Ballenpresse (1) zu erfassen,
wobei die Steuerungseinrichtung (10) mindestens eine Datenverarbeitungsanlage (16) und mindestens einen Datenspeicher (17) aufweist, wobei auf dem Datenspeicher (17) mindestens eine Beziehung zwischen der Masse eines Ballens (3) und dem mindestens einen Betriebsparameter der Ballenpresse (1) und eine Beziehung zwischen der erfassten Feuchte und dem Sollwert für die Masse eines Ballens (3) hinterlegt ist.

2. Ballenpresse (1) nach Anspruch 1, **dadurch gekennzeichnet, dass** die Steuerungseinrichtung (10) mittels einer Datenverbindung (12) mit dem Hauptverdichter (7) verbunden ist, sodass mittels der Steuerungseinrichtung (10) zumindest ein Betriebsparameter des Hauptverdichters (7) veränderbar ist.

3. Ballenpresse (1) nach Anspruch 1 oder 2, **dadurch gekennzeichnet, dass** die Steuerungseinrichtung (10) mittels einer Datenverbindung (13) mit dem Vorverdichter (6) verbunden ist, sodass mittels der Steuerungseinrichtung (10) zumindest ein Betriebsparameter des Vorverdichters (6) veränderbar ist.

4. Ballenpresse (1) nach einem der Ansprüche 1 bis 3, **dadurch gekennzeichnet, dass** auf dem Datenspeicher (17) für mindestens einen Betriebsparameter der Ballenpresse (1), vorzugsweise für sämtliche Betriebsparameter, ein Parameterraum gespeichert ist, innerhalb dessen der jeweilige Betriebsparameter mittels der Steuerungseinrichtung (10) selbsttätig veränderbar ist.

5. Erntemaschinenanordnung (18), umfassend
- eine Arbeitsmaschine (19) sowie
- eine landwirtschaftliche Ballenpresse (1) nach einem der Ansprüche 1 bis 4,
wobei die Ballenpresse (1) derart mit der Arbeitsmaschine (19) gekoppelt ist, dass die Ballenpresse (1) mittels der Arbeitsmaschine (19) schleppbar ist,
wobei die Ballenpresse (1) mittels einer Drehmomentkupplung (26) an die Arbeitsmaschine (19) angeschlossen ist, sodass Arbeitsorgane der Ballenpresse (1) mittels der Arbeitsmaschine (19) antreibbar sind,
wobei die Steuerungseinrichtung (10) der Ballenpresse (1) derart mit der Arbeitsmaschine (19) in Wirkverbindung steht, dass sie dazu geeignet ist, mindestens einen Betriebsparameter der Arbeitsmaschine (19) selbsttätig zu verändern.

6. Erntemaschinenanordnung (18) nach Anspruch 5, **dadurch gekennzeichnet, dass** an der Arbeitsmaschine (19) eine weitere Sensoreinrichtung (14") angeordnet, die mittels einer Datenverbindung (15") mit der Steuerungseinrichtung (10) verbunden ist, wobei die Sensoreinrichtung (14") mit der Drehmomentkupplung 26 der Arbeitsmaschine (19) in Verbindung steht und dazu geeignet ist, ein übertragenes Drehmoment zu erfassen und an die Steuerungseinrichtung (10) weiterzuleiten.

7. Verfahren zum Betrieb einer landwirtschaftlichen Ballenpresse (1) nach einem der Ansprüche 1 bis 4, umfassend die folgenden Verfahrensschritte:
a) Zu verdichtendes Material (2) wird mittels der Ballenpresse (1) von einem Untergrund (20) aufgenommen und einem Vorkanal (4) zugeführt,
b) Innerhalb des Vorkanals (4) wird das Material (2) mittels eines Vorverdichters (6) verdichtet und an in einen Hauptkanal (5) überführt,
c) Innerhalb des Hauptkanals (5) wird das Material (2) mittels eines Hauptverdichters (7) weiter verdichtet,
d) Verdichtetes Material (2) wird mittels einer Bindeeinrichtung (8) mit einer Bindeschnur eingefasst, sodass sich ein Ballen (3) bildet,
**gekennzeichnet durch** die folgenden Verfahrensschritte:
e) Mittels einer Wägeeinrichtung (9) der Ballenpresse (1) werden Daten betreffend eine Masse des jeweiligen Ballens (3) erfasst,
f) Die mittels der Wägeeinrichtung (9) erfassten Daten betreffend die Masse des jeweiligen Ballens (3) werden an die Steuerungseinrichtung (10) der Ballenpresse (1) geleitet,
g) In Abhängigkeit der Masse des jeweiligen Ballens (3) wird mittels der Steuerungseinrichtung (10) selbsttätig mindestens ein Betriebsparameter der Ballenpresse (1) verändert, sodass die Masse mindestens eines nachfolgenden Ballens (3) in Richtung eines vorgegebenen Sollwerts verändert wird,
wobei auf einem Datenspeicher (17) der Steuerungseinrichtung (10) mindestens eine Beziehung zwischen der Masse eines Ballens (3) und dem mindestens einen Betriebsparameter der Ballenpresse (1) und eine Beziehung zwischen einer mittels einer Sensoreinrichtung (14) der Ballenpresse (1) erfassten Feuchte des aufgenommenen Materials (2) und dem Sollwert für die Masse eines Ballens (3) hinterlegt ist.

8. Verfahren nach Anspruch 7, **dadurch gekennzeichnet, dass** mittels der Steuerungseinrichtung (10) mindestens ein Betriebsparameter betreffend den Hauptverdichter (7) und/oder mindestens ein Betriebsparameter betreffend den Vorverdichter geändert wird bzw. werden.

9. Verfahren nach Anspruch 8, **dadurch gekennzeichnet, dass** zumindest eine Presskraft des Hauptverdichters (7) und/oder eine Presskraft des Vorverdichters (6) geändert wird bzw. werden.

10. Verfahren nach einem der Ansprüche 7 bis 9, **dadurch gekennzeichnet, dass** mittels der Steuerungseinrichtung (10) mindestens ein Betriebsparameter einer die Ballenpresse (1) schleppenden Arbeitsmaschine (19) selbsttätig verändert wird, vorzugsweise eine Fahrgeschwindigkeit der Arbeitsmaschine (19).

11. Verfahren nach einem der Ansprüche 7 bis 10, **dadurch gekennzeichnet, dass** die Steuerungseinrichtung (10) eine Mehrzahl von Betriebsparametern der Ballenpresse (1) verändert, vorzugsweise gleichzeitig.

12. Verfahren nach Anspruch 11, **dadurch gekennzeichnet, dass** die Betriebsparameter lediglich innerhalb eines vorgegebenen Parameterraums verändert werden, wobei bei Erreichen eines Grenzwerts des Parameterraums eines jeweiligen Betriebsparameters zwecks weitergehender Beeinflussung der Masse mindestens eines nachfolgenden Ballens (3) ein anderer Betriebsparameter verändert wird.

## Claims

1. An agricultural baler (1) for baling material (2) into square bales (3), in particular for baling straw bales, comprising
- a preliminary channel (4),
- a main channel (5),
- at least one pre-compressor (6),
- at least one main compressor (7), as well as
- at least one binding device (8),
wherein the material (2) can be pre-compressed inside the preliminary channel (4) by means of the pre-compressor (6) and can then be transferred into the main channel (5),
wherein a compressor piston (21) of the main compressor (7) can be oscillated backwards and forwards inside the main channel (5) and in this manner, material (2) located in the main channel (5) can be compressed further,
wherein the compressed material (2) can be bound with a binding twine by means of the binding device (8), so that the material (2) is aggregated into a bale (3),
**characterized in that**
the baler (1) comprises at least one weighing device (9), wherein data relating to a mass of at least one bale (3) can be detected by means of the weighing device (9), wherein the baler (1) comprises a control device (10) which is suitable for automatically changing at least one operating parameter of the baler (1),
wherein the data detected by the weighing device (9) relating to the mass of a respective bale (3) can be fed to the control device (10) by means of a data connection (11),
wherein the control device (10) is suitable for automatically changing the at least one operating parameter as a function of the mass of the respective bale (3) in a manner such that the mass of at least one subsequent bale (3) is changed towards a specified nominal value,
wherein the weighing device (9) is disposed at a rear end of the baler (1),
wherein the mass of the respective bale (3) can be detected by means of the weighing device (9) prior to it being deposited on a substrate (20),
wherein the baler (1) comprises sensor devices (14, 14'), by means of which at least one material parameter of the material (2) to be compressed can be detected,
wherein the sensor devices (14, 14') are connected to the control device (10) by means of a data connection (15),
wherein one sensor device (14) is configured to determine a moisture content of the material (2) which has been picked up, and the further sensor device (14') is formed by an optical sensor which is suitable for detecting a geometry of a swath of material (2) deposited on the substrate (20) immediately before the material (2) is picked up by means of the baler (1),
wherein the control device (10) has at least one data processing unit (16) and at least one data storage unit (17), wherein at least one relationship between the mass of a bale (3) and the at least one operating parameter of the baler (1) and a relationship between the detected moisture content and the nominal value for the mass of a bale (3) is stored on the data storage unit (17).

2. The baler (1) according to claim 1, **characterized in that** the control unit (10) is connected to the main compressor (7) by means of a data connection (12), so that at least one operating parameter of the main compressor (7) can be changed by means of the control device (10).

3. The baler (1) according to claim 1 or claim 2, **characterized in that** the control device (10) is connected to the pre-compressor (6) by means of a data connection (13), so that at least one operating parameter of the pre-compressor (6) can be changed by means of the control device (10).

4. The baler (1) according to one of claims 1 to 3, **characterized in that** for at least one operating parameter of the baler (1), preferably for all of the operating parameters, a parameter space is stored on the data storage unit (17), within which the respective operating parameters can be automatically changed by means of the control device (10).

5. A harvesting machine assembly (18), comprising
- a working machine (19), as well as
- an agricultural baler (1) according to one of claims 1 to 4,
wherein the baler (1) is coupled to the working machine (19) in a manner such that the baler (1) can be towed by means of the working machine (19),
wherein the baler (1) is connected to the working machine (19) by means of a torque clutch (26), so that working units of the baler (1) can be driven by means of the working machine (19),
wherein the control device (10) of the baler (1) is operatively connected to the working machine (19) in a manner such that it is suitable for automatically changing at least one operating parameter of the working machine (19).

6. The harvesting machine assembly (18) according to claim 5, **characterized in that** a further sensor device (14") is disposed on the working machine (19) and is connected to the control device (10) by means of a data connection (15"), wherein the sensor device (14") is connected to the torque clutch (26) of the working machine (19) and is suitable for detecting a transmitted torque and relaying it to the control device (10).

7. A method for operating an agricultural baler (1) according to one of claims 1 to 4, comprising the following method steps:
a) material (2) to be compressed is picked up from a substrate (20) by means of the baler (1) and fed to a preliminary channel (4),
b) inside the preliminary channel (4), the material (2) is compressed by means of a pre-compressor (6) and transferred into a main channel (5),
c) inside the main channel (5), the material (2) is compressed further by means of a main compressor (7),
d) compressed material (2) is bound with a binding twine by means of a binding device (8), so that a bale (3) is formed,
**characterized by** the following method steps:
e) data relating to a mass of the respective bale (3) is detected by means of a weighing device (9),
f) the data relating to the mass of the respective bale (3) detected by means of the weighing device (9) are fed to the control device (10) of the baler (1),
g) at least one operating parameter of the baler (1) is changed automatically by means of the control device (10) as a function of the mass of the respective bale (3), so that the mass of at least one subsequent bale (3) is changed towards a specified nominal value,
wherein at least one relationship between the mass of a bale (3) and the at least one operating parameter of the baler (1) and a relationship between a moisture content of the material (2) which has been picked up, detected by means of a sensor device (14) of the baler (1), and the nominal value for the mass of a bale (3) is stored on a data storage unit (17) of the control device (10).

8. The method according to claim 7, **characterized in that** at least one operating parameter relating to the main compressor (7) and/or at least one operating parameter relating to the pre-compressor is or are changed by means of the control device (10).

9. The method according to claim 8, **characterized in that** at least a compressive force of the main compressor (7) and/or a compressive force of the pre-compressor (6) is or are changed.

10. The method according to one of claims 7 to 9, **characterized in that** at least one operating parameter of a working machine (19) towing the baler (1), preferably a travel speed of the working machine (19), is changed automatically by means of the control device (10).

11. The method according to one of claims 7 to 10, **characterized in that** the control device (10) changes a plurality of operating parameters of the baler (1), preferably simultaneously.

12. The method according to claim 11, **characterized in that** the operating parameters are only changed within a specified parameter space, wherein, upon reaching a limiting value of the parameter space for a respective operating parameter, for the purposes of further influencing the mass of at least one subsequent bale (3), another operating parameter is changed.

## Revendications

1. Presse à balles (1) agricole, destinée à presser un produit (2) pour former des balles (3) parallélépipédiques, notamment pour presser des balles de paille, comprenant
- un précanal (4),
- un canal principal (5),
- au moins un précompacteur (6),
- au moins un compacteur principal (7), et
- au moins un dispositif de liage (8),
dans laquelle le produit (2) peut être précompacté dans le précanal (4) à l'aide du précompacteur (6) et peut ensuite être amené dans le canal principal (5),
dans laquelle un piston de compactage (21) du compacteur principal (7) peut être déplacé en un mouvement de va-et-vient oscillant dans le canal principal (5), et le produit (2) se trouvant dans le canal principal (5) peut ainsi être compressé davantage,
dans laquelle le produit (2) compacté peut être entouré d'une ficelle de liage à l'aide du dispositif de liage (8), de sorte que le produit (2) est rassemblé pour former une balle (3),
**caractérisée en ce que**
la presse à balles (1) comprend au moins un dispositif de pesage (9),
où le dispositif de pesage (9) permet de recueillir des données concernant une masse d'au moins une balle (3), où la presse à balles (1) comprend un dispositif de commande (10) qui est adapté pour modifier automatiquement au moins un paramètre de fonctionnement de la presse à balles (1),
où les données concernant la masse d'une balle (3) respective, qui ont été recueillies par le dispositif de pesage (9), peuvent être transmises au dispositif de commande (10) par l'intermédiaire d'une connexion de données (11),
où le dispositif de commande (10) est adapté pour modifier automatiquement le paramètre de fonctionnement, au nombre d'au moins un, en fonction de la masse de la balle (3) respective, de manière à ce que la masse d'au moins une balle (3) qui suit soit modifiée dans le sens d'une valeur de consigne prédéfinie,
où le dispositif de pesage (9) est installé sur une extrémité arrière de la presse à balles (1),
où le dispositif de pesage (9) permet de déterminer la masse de la balle (3) respective, avant le dépôt de celle-ci sur un sol (20),
où la presse à balles (1) comprend des dispositifs capteurs (14, 14') qui permettent de détecter au moins un paramètre du produit (2) à compacter,
où les dispositifs capteurs (14, 14') sont reliés au dispositif de commande (10) par l'intermédiaire d'une connexion de données (15),
où l'un des dispositifs capteurs (14) est agencé pour déterminer une humidité du produit (2) ramassé, et l'autre dispositif capteur (14') est constitué d'un capteur optique qui est adapté pour détecter une géométrie d'un dépôt d'andains du produit (2) sur le sol (20), immédiatement avant le ramassage du produit (2) par la presse à balles (1),
où le dispositif de commande (10) comprend au moins un système de traitement de données (16) et au moins une mémoire de données (17), sachant qu'au moins une relation entre la masse d'une balle (3) et le paramètre de fonctionnement, au nombre d'au moins un, de la presse à balles (1) et une relation entre l'humidité détectée et la valeur de consigne pour la masse d'une balle (3) sont enregistrées dans la mémoire de données (17).

2. Presse à balles (1) selon la revendication 1, **caractérisée en ce que** le dispositif de commande (10) est relié au compacteur principal (7) via une connexion de données (12), de sorte que le dispositif de commande (10) permet de modifier au moins un paramètre de fonctionnement du compacteur principal (7).

3. Presse à balles (1) selon la revendication 1 ou 2, **caractérisée en ce que** le dispositif de commande (10) est relié au précompacteur (6) via une connexion de données (13), de sorte que le dispositif de commande (10) permet de modifier au moins un paramètre de fonctionnement du précompacteur (6).

4. Presse à balles (1) selon une des revendications 1 à 3, **caractérisée en ce qu'**une gamme de paramètres est enregistrée dans la mémoire de données (17) pour au moins un paramètre de fonctionnement de la presse à balles (1), de préférence pour l'ensemble des paramètres de fonctionnement, mémoire dans laquelle le paramètre de fonctionnement concerné peut être modifié automatiquement au moyen du dispositif de commande (10).

5. Attelage de machine de récolte (18) comprenant
- une machine de travail (19), et
- une presse à balles (1) agricole selon une des revendications 1 à 4,
où la presse à balles (1) est accouplée à la machine de travail (19) de manière à ce que la presse à balles (1) puisse être tractée au moyen de la machine de travail (19),
où la presse à balles (1) est raccordée à la machine de travail (19) au moyen d'un accouplement de couple (26), de sorte que des organes de travail de la presse à balles (1) peuvent être entraînés au moyen de la machine de travail (19),
où le dispositif de commande (10) de la presse à balles (1) est en liaison fonctionnelle avec la machine de travail (19), de manière à ce qu'il soit apte à modifier automatiquement au moins un paramètre de fonctionnement de la machine de travail (19).

6. Attelage de machine de récolte (18) selon la revendication 5, **caractérisé en ce qu'**il est prévu sur la machine de travail (19), un dispositif capteur (14'') supplémentaire qui est relié au dispositif de commande (10) via une connexion de données (15''), le dispositif capteur (14'') étant relié à l'accouplement de couple 26 de la machine de travail (19) et étant apte à détecter un couple transmis et à le transmettre au dispositif de commande (10).

7. Procédé de fonctionnement d'une presse à balles (1) agricole selon une des revendications 1 à 4, comprenant les étapes de procédé suivantes :
a) le produit (2) devant être compacté est ramassé au sol au moyen de la presse à balles (1) et est amené à un précanal (4),
b) dans le précanal (4), le produit (2) est pressé au moyen d'un précompacteur (6) et amené dans un canal principal (5),
c) dans le canal principal (5), le produit (2) est soumis à une compression supplémentaire au moyen d'un compacteur principal (7),
d) le produit (2) compacté est entouré avec une ficelle de liage au moyen d'un dispositif de liage (8), de manière à former une balle (3),
**caractérisé en ce qu'**il comprend les étapes de procédé suivantes :
e) des données concernant une masse de la balle (3) respective sont recueillies au moyen d'un dispositif de pesage (9) de la presse à balles (1),
f) les données concernant la masse de la balle (3) respective, qui ont été recueillies au moyen du dispositif de pesage (9), sont transmises au dispositif de commande (10) de la presse à balles (1),
g) au moins un paramètre de fonctionnement de la presse à balles (1) est modifié automatiquement au moyen du dispositif de commande (10), en fonction de la masse de la balle (3) respective, de sorte que la masse d'au moins une balle (3) qui suit est modifiée en direction d'une valeur de consigne prédéfinie,
sachant qu'au moins une relation entre la masse d'une balle (3) et le paramètre de fonctionnement, au nombre d'au moins un, de la presse à balles (1) et une relation entre une humidité du produit (2) ramassé, détectée au moyen d'un dispositif capteur (14) de la presse à balles (1), et la valeur de consigne pour la masse d'une balle (3) sont enregistrées dans une mémoire de données (17) du dispositif de commande (10).

8. Procédé selon la revendication 7, **caractérisé en ce qu'**au moins un paramètre de fonctionnement concernant le compacteur principal (7) et/ou au moins un paramètre de fonctionnement concernant le précompacteur est/sont modifié(s) au moyen du dispositif de commande (10).

9. Procédé selon la revendication 8, **caractérisé en ce qu'**au moins une force de pressage du compacteur principal (7) et/ou une force de pressage du précompacteur (6) est/sont modifiée(s).

10. Procédé selon une des revendications 7 à 9, **caractérisé en ce qu'**au moins un paramètre de fonctionnement d'une machine de travail (19) tractant la presse à balles (1) peut être modifié automatiquement au moyen du dispositif de commande (10), de préférence une vitesse de déplacement de la machine de travail (19).

11. Procédé selon une des revendications 7 à 10, **caractérisé en ce que** le dispositif de commande (10) modifie une pluralité de paramètres de fonctionnement de la presse à balles (1), de préférence en même temps.

12. Procédé selon la revendication 11, **caractérisé en ce que** les paramètres de fonctionnement sont modifiés seulement à l'intérieur d'une gamme de paramètres prédéfinie, sachant que lorsqu'une valeur limite de la gamme de paramètres d'un paramètre de fonctionnement concerné est atteinte, un autre paramètre de fonctionnement est modifié en vue d'une influence supplémentaire sur la masse d'une balle (3) qui suit.
